Europäisches Patentamt

European Patent Office

Office européen des brevets

(11) Veröffentlichungsnummer: **0 255 609**
**A2**

(12) **EUROPÄISCHE PATENTANMELDUNG**

(21) Anmeldenummer: **87109759.8**

(22) Anmeldetag: **07.07.87**

(51) Int. Cl.⁴: **B23Q 16/02**

(30) Priorität: **31.07.86 DE 3625979**

(43) Veröffentlichungstag der Anmeldung:
**10.02.88 Patentblatt 88/06**

(84) Benannte Vertragsstaaten:
**AT BE CH DE ES FR GB GR IT LI LU NL SE**

(71) Anmelder: **Heringer & Schipper GmbH**
**Hitdorfer Strasse 10**
**D-4018 Langenfeld(DE)**

(72) Erfinder: **Ludwig, Erich**
**Düsseldorfer Strasse 134**
**D-4018 Langenfeld/Rhid(DE)**

(74) Vertreter: **Plöger, Ulrich, Dipl.-Ing.**
**Benrather Schlossallee 89**
**D-4000 Düsseldorf-Benrath(DE)**

(54) **Stufenlos einstellbarer Rundteiltisch.**

(57) Die Erfindung bezieht sich auf einen stufenlos einstellbaren Rundteiltisch, bei dem eine Winkeleinstellung über ein Einstellgetriebe auf ein Kupplungsteil übertragen wird, das konzentrisch zu einem ersten Kupplungsteil angeordnet und an letzteres anpreßbar ist. Mittels eines Einstellgetriebes, das im direkten Eingriff mit einem Getrieberad steht, wird ein beweglicher Anschlag in Bezug auf einen am Gehäuse angeordneten, feststehenden Anschlag verstellt, zwischen welchen beiden Anschlägen sich ein am Kupplungsteil befindlicher Gegenanschlag im eingekuppelten Zustand des Tisches bewegen kann. Die beiden Kupplungsteile können durch axiale Beaufschlagung in und außer Eingriff miteinander gebracht werden. Die Bauhöhe des Rundteiltisches ist gering, während sein Aufbau einfach und die Einstellgenauigkeit hoch sind.

FIG. 1

EP 0 255 609 A2

Die Erfindung bezieht sich auf einen stufenlos einstellbaren Rundteiltisch, der mit einem konzentrischen, ersten Kupplungsteil ausgeführt ist, an welches ein zweites, konzentrisches Kupplungsteil anpreßbar ist, dessen Winkelstellung über ein Einstellgetriebe vorgebbar ist.

Ein derartiger stufenlos einstellbarer Rundteiltisch ist nach der DE-PS 21 51 946 bekannt. Dabei besteht der Kupplungsmechanismus in einer Rollenfreilaufkupplung, dessen Innenring mit der Antriebswelle des Rundteiltisches verbunden ist, während sich der Außenring an einem Zahnrand befindet, so daß sich beim Antrieb des Zahnrades der Rundteiltisch in einer Richtung mitnehmen läßt, während in der dazu entgegengesetzten Drehrichtung der Freilauf wirksam ist. Den erwähnten Antrieb vermittelt eine Zahnstange, die ihrerseits über eine zweite Verzahnung mit einem Zahnrad in Eingriff steht, welches mittels einer Schaltwelle betätigt wird. Diese Schaltwelle wirkt über eine Zugstange mit einem Keilringpaar zusammen, durch welches der Rundteiltisch mit der Antriebswelle bei einer Verschwenkbewegung festgeklemmt ist, welche festgeklemmte Stellung auch bei der Bearbeitung des Werkstückes erhalten bleibt. Für die Umstellung auf eine andere Teilung wird die Festklemmung indes gelöst. Die Zahnstange steht mit ihren Verzahnungen in zwei Ebenen mit Zahnrädern in Eingriff, während sie ihrerseits der Einstellbarkeit mit der Einstellspindel unterliegt. Diese Anordnung führt zu einem verhältnismäßig hohen Bau des Gehäuses, für den die Platzverhältnisse je nach Werkzeugmaschine nicht immer vorhanden sind. Ein Nachteil ist weiterhin, daß die Genauigkeitsanforderungen lediglich für den normalen Werkstattgebrauch erfüllt werden können.

Durch den Eingriff der Zahnräder in zwei Ebenen ist, um die Bauhöhe des Tisches nicht noch mehr zu erhöhen, nur eine Teilung zwischen 0 bis 45° möglich. Eine größere Teilung würde größere Zahnräder erforderlich machen.

Hiervon ausgehen liegt der Erfindung die Aufgabenstellung zugrunde, den Rundteiltisch einschließlich seines Gehäuses in seiner Bauhöhe wesentlich herabzusetzen. Weiterhin soll sich sein Aufbau vereinfachen und die Einstellgenauigkeit der Teilung auch erhöhten Anforderungen Rechnung tragen.

Die Erfindung löst die Aufgabenstellung durch die patentanspruchsgemäßen Vorschläge.

Durch den vorgeschlagenen direkten Eingriff des Einstellorganes mit einem Getrieberad, wie er durch die relative Lage der Anschläge des Anschlagpaares vorgegeben ist, lassen sich Einstellabweichungen, die sonst durch die Verstellbarkeit des Getriebes auftreten, vermeiden. Die Kupplung erlaubt eine Festklemmung der beiden Kupplungsteile in jeder Winkelstellung, ohne daß jemals ein Schlupf auftreten kann. Somit wird eine einmal vorgegebene Winkelstellung auch präzise auf den Rundteiltisch übertragen.

Das Einstellorgan des Einstellgetriebes ist mit Vorteil eine Einstellschnecke, die einerseits eine hohe Einstellpräzision andererseits eine Selbsthemmung bei der Übertragung gewährleistet. Im direkten Eingriff mit der Einstellschnecke steht ein Schneckenrad. Dessen Spiel läßt sich noch weitergehend ausschalten, während die Einstellschnecke mit einem schrägverzahnten Stirnrad als Getrieberad im direkten Eingriff steht.

Vorteilhaft ist das zweite Kupplungsteil am ersten Kupplungsteil durch axiale Beaufschlagung anpreßbar, während bei Überwindung dieser Anpreßspannung der Tisch an eine das Gehäuse nach oben anschließende Gehäuseplatte angepreßt ist. Die sonst nach dem Stand der Technik erforderliche Feststelleinrichtung entfällt auf diese Weise.

Das erste Kupplungsteil läßt sich vorteilhaft mit Tellerfedern in Richtung auf das zweite Kupplungsteil beaufschlagen, die mittels des Flansches einer konzentrischen Kupplungsachse an dem vom Tisch gehaltenen ersten Kupplungsteil in axialer Richtung weiter anpreßbar sind, bis die Anpreßspannung zwischen dem ersten und dem zweiten Kupplungsteil überwunden ist und demgemäß der Tisch an der Gehäuseplatte angepreßt ist.

Man kann in einfacher Weise die Kupplungsachse mittels einer im Gehäuse gelagerten Exzenterwelle betätigen, die eine Querbohrung der Kupplungsachse durchsetzt.

Mit geringerem Kraftaufwand sowie gleichmäßiger läßt sich die Kupplungsachse mit einer Schraubmutter betätigen, die auf ein am Ende der Kupplungsachse vorgesehenes Gewinde aufgeschraubt ist sowie zweckmäßig einen seitlich herausgeführten Hebel aufweist. Die Schraubmutter ist im übrigen so gelagert, daß sich ihre axiale Stelle bei Drehung gegenüber dem Gehäuse nicht verändert.

Besonders schnell und gleichmäßig kommt man zu einer axialen Anpressung der Kupplungsachse mittels zwei zu ihr konzentrischen sowie relativ zueinander verdrehbaren ringförmigen Scheiben, die mit axialem Abstand voneinander vorgesehen sind, und von denen eine auf die Kupplungsachse einwirkt, während die andere an einer Bodenbüchse des Gehäuses befestigt ist. Die Scheiben haben bei ihren einander zu gekehrten Planflächen aufeinander einwirkende, keilförmige Schrägen. Die auf die Kupplungsachse einwirkende Scheibe läßt sich außerhalb des Gehäuses mittels eines Kettentriebes verdrehen, für dessen Antrieb wiederum ein mit einem Fluid beaufschlagbarer Zylinder von Vorteil ist.

Die vorgeschlagenen Arten der Betätigung der Kupplungsachse erlauben eine besonders niedrige Bauhöhe des Rundteiltisches. Sofern es Platzverhältnisse unter dem Gesichtspunkt der Bauhöhe indes zulassen, kann man die Kupplungsachse auch unmittelbar aus einem Zylinder dichtend herausführen, der mit einem Fluid beaufschlagbar ist, und somit einen direkten Eingriff auf die Kupplungsachse gestattet.

Im Interesse einer leistungsfähigen Betriebsweise läßt sich das zweite Kupplungsteil mit einer auslösbaren, selbsttätigen Rückstellung versehen, die den Gegenanschlag von seiner Anlage am zweiten Anschlag in seine Ausgangslage am ersten Anschlag überführt. Für diesen Zweck ist das zweite Kupplungsteil vorteilhaft mit einer Außenverzahnung versehen, an welcher ein Rückstellantrieb angreift.

Die Bauhöhe läßt sich besonders niedrig ausführen, wenn der erste Anschlag sich auf einer Seite des Getrieberades befindet, welches auf seiner gegenüberliegenden Seite im Winkelbereich zwischen 0 bis mindestens 180° für den Eingriff mit dem Einstellorgan des Einstellgetriebes ausgeführt ist. Größere Winkelbereiche sind bei entsprechender Auslegung der Anschläge möglich.

Die Einstellarbeiten lassen sich noch durch einen motorischen Antrieb für das Einstellorgan erleichtern. Dabei besteht die Möglichkeit, die Voreinstellung des Winkels vorzunehmen, die nach Einstellung des Antriebes angesteuert wird.

Um den eingestellten Winkel darzustellen, wird zweckmäßig das den ersten Anschlag tragende Getrieberad des Einstellgetriebes mit einem Signalgeber versehen. Zusätzlich läßt sich das Einstellorgan des Einstellgetriebes mit einem Drehgeber ausstatten, so daß die Voreinstellung des Winkels mittels einer Digitalanzeige ablesbar ist.

Mittels in Plus-und Minusrichtung des mit dem beweglichen Anschlag versehenen Getrieberades ansprechender Näherungsschalter läßt sich eine Feinkorrektur der Einstellungen mit einem oder mehreren Kontaktnocken vornehmen.

Die bei hoher betrieblicher Leistung auftretenden Stöße an den Anschlägen werden erfindungsgemäß durch dort vorgesehene Stoßdämpfer aufgefangen, so daß die Haltbarkeit des Rundteiltisches hiervon nicht beeinträchtigt wird.

Zur weitergehenden Veranschaulichung der Erfindung wird auf die sich auf Ausführungsbeispiele beziehenden Zeichnungen Bezug genommen. Darin zeigen:

Figur 1 eine erste Ausführungsform des neuen Rundteiltisches im Querschnitt,

Figur 2 eine weitere Ausführungsform des neuen Rundteiltisches in zwei verschiedenen Querschnittsdarstellungen, und

Figur 3 eine Draufsicht entsprechend der Schnittlinie III-III der Figur 2.

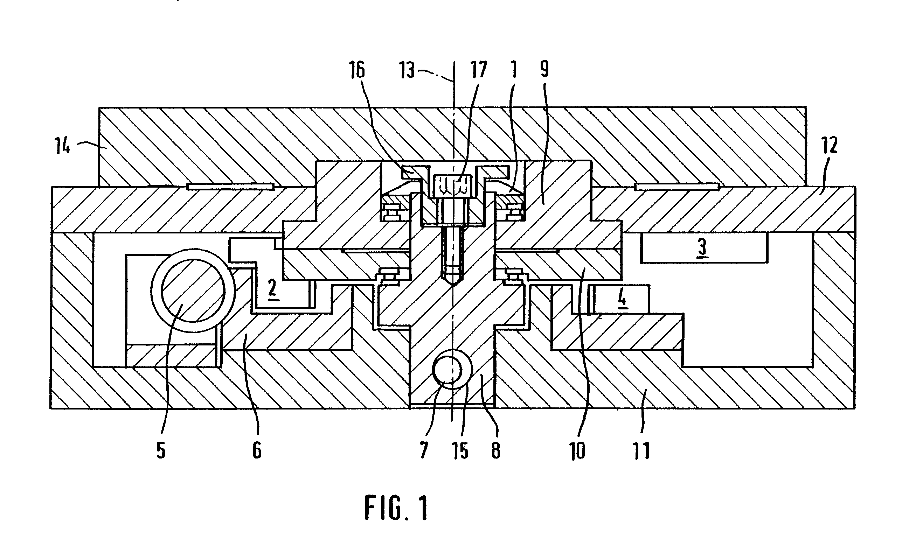

In Figur 1 sind der erste Anschlag 4 und der zweite Anschlag 3 im Interesse einer besseren Erkennbarkeit versetzt wiedergegeben. Zutreffend müßte sich zwischen beiden Anschlägen der Gegenanschlag 2 befinden.

Man erkennt ein Gehäuse 11, welches oben mit einer Gehäuseplatte 12 verschlossen ist. In der Bodenplatte des Gehäuses 11 ist zentral die Kupplungsachse gelagert sowie in axialer Richtung verschieblich, zu welchem Zweck sie eine Querbohrung 15 aufweist, die eine Exzenterwelle 7 durchsetzt, das seinerseits in den zeichnerisch nicht wiedergegebenen Stirnwänden des Gehäuses gelagert ist. Die Kupplungsachse 8 ist wie auch die übrigen Kupplungsteile konzentrisch zur Achse 13 angeordnet. Im oberen Abschnitt ist ein Flansch 16 mittels einer Schraube 17 gehalten, wobei der Rand des Flansches 16 einen Satz Tellerfedern 1 beaufschlagt. Letztere stützen sich in vorgespanntem Zustand am ersten Kupplungsteil 9 ab, welches mit der Rückseite des Tisches 14 verschraubt ist. In der zeichnungsgemäß dargestellten Lage liegt die Unterseite des Tisches 14 an der Oberfläche der Gehäuseplatte 12 lose an, ohne gegen letztere angepreßt zu sein. In diesem Zustand versuchen die Tellerfedern 1 die Kupplungsachse 8 über den Flansch 16 nach oben zu schieben. Der verbreiterte Mittel abschnitt der Kupplungsachse 8 liegt indes mit einer Stufe an der Unterseite des zweiten Kupplungsteils 10 an und hält letzteres am ersten Kupplungsteil 9 angepreßt. Das Kupplungsteil 10 trägt einen Gegenanschlag 2, mit Rücksicht auf welchen bereits weiter oben ausgeführt wurde, daß er eigentlich im rechten Zeichnungsteil dargestellt sein müßte. Dieser Gegenanschlag 2 dreht sich also gleichsinnig mit den Tisch 14, für den ein Drehkreuz besteht. Von einer Ausgangslage, in welcher der Gegenanschlag 2 an dem Anschlag 4 des Anschlagpaares 3, 4 anliegt, läßt sich der Tisch und somit auch der Gegenanschlag 2 bis in eine Stellung verdrehen, in welcher der Gegenanschlag am fest mit der Gehäuseplatte 12 verbundenen Anschlag 3 anliegt.

Aus dieser Position heraus soll nun der Tisch 14 mit einem eingespannten Werkstück in seine nächste Stellung indexiert werden. Zu diesem Zweck wird die Exzenterwelle 7 betätigt, so daß die Kupplungsachse 8 nach unten geschoben wird. Dabei gerät einerseits der Tisch 14 in Bezug auf die Gehäuseplatte 12 in eine Anpreßstellung.

Andererseits wird die Vorspannungskraft der Tellerfedern 1 überwunden und damit die Anpressung des zweiten Kupplungsteils 10 an das erste Kupplungsteil 9 aufgehoben. Aus dieser Lage kann das zweite Kupplungsteil 10 und somit auch der Gegenanschlag 2 in die Ausgangslage zurückkehren, in welcher der Gegenanschlag 2 am Anschlag 4 anliegt. Dieser Bewegungsrückkehr läßt sich mittels einer selbsttätigen Rückstellung bewirken, die im einfachsten Falle aus einer Feder bestehen kann, welche zuvor eine Drehspannung aufgenommen hat und sich im Wege der Rückstellung entlädt. Indes läßt sich auch Pneumatik-oder ein Hydraulikzylinder verwenden. Sowie der Gegenanschlag 2 am Anschlag 4 auf diese Weise zur Anlage gebracht wurde, wird die Exzenterwelle 7 erneut betätigt, so daß sich der Tisch 14 in Bezug auf die Gehäuseplatte 12 erneut drehen läßt, da die Anpreßwirkung überwunden wurde. Der Tisch kann somit also erneut verschwenkt werden, bis der Gegenanschlag 2 am ortsfesten Anschlag 3 anliegt.

Die erwähnte Bedienungsweise hat den Vorteil der Einhandbedie nung, denn letztlich muß lediglich die Exzenterwelle 7 geschaltet werden, damit die vorerwähnten Vorgänge durchgeführt werden können.

Um nun die Winkelstellung genau vorgeben zu können, ist die Einstellschnecke 5 in den Stirnseiten des Gehäuses 11 gelagert und von Hand derart verdrehbar, daß eine Skala den Drehwinkel anzeigt, welcher von der Einstellschnecke 5 auf das Schneckenrad 6 übertragen wurde. Da eine Selbsthemmung besteht, ist dieser Vorgang nicht reversibel. Es kommt auf diese Weise gleichzeitig zur Winkeleinstellung des Anschlages 4, der, wie beschrieben wurde, als Ausgangsanschlag für die Bewegungen des Tisches 14 dient. Diese Anordnung hat mithin auch noch den Vorteil, daß man, während noch eine Bearbeitung läuft, bereits die nächste Einstellung für eine neue Teilung der Schnecke vornehmen kann, sofern mehrere Teilungen bei einem oder bei einigen Werkstücken notwendig sind.

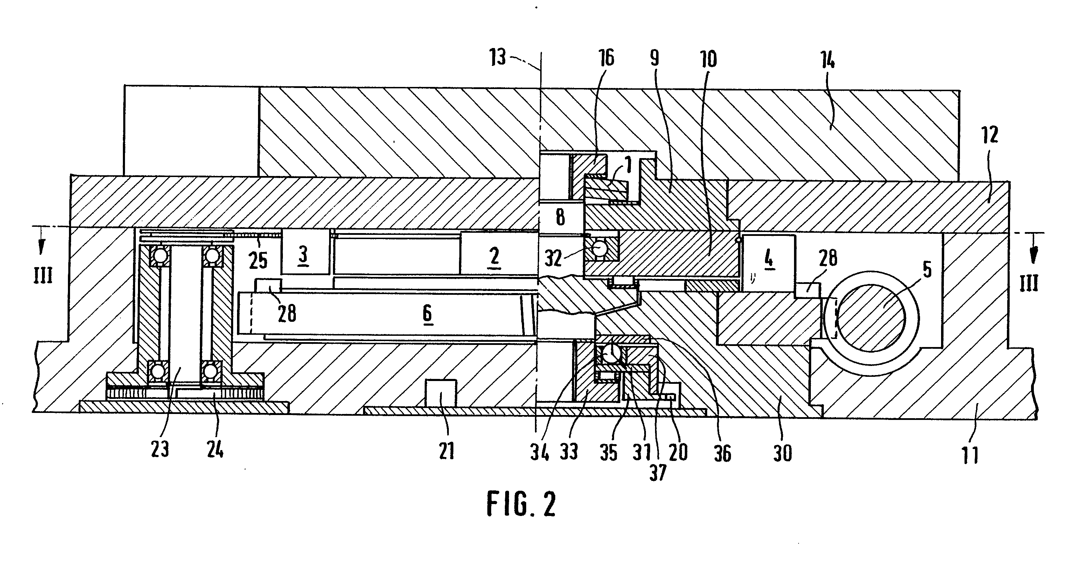

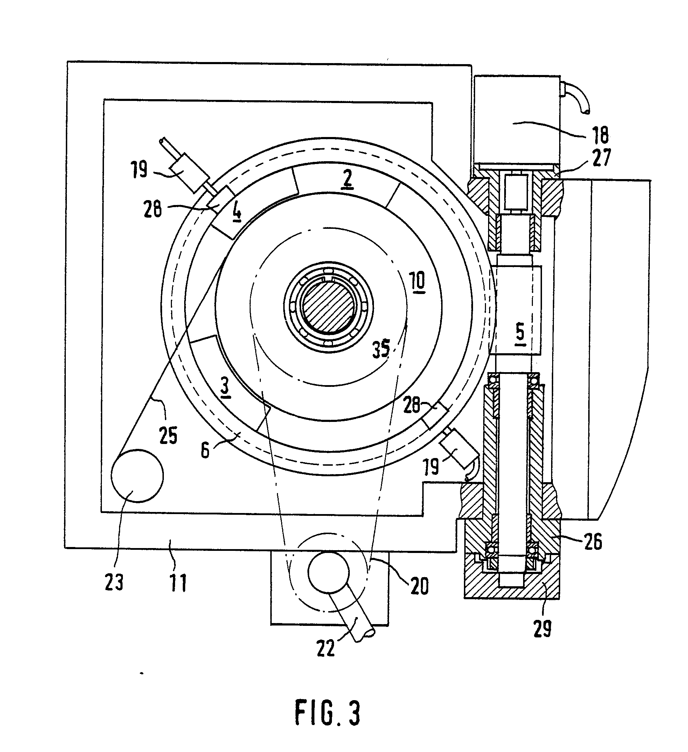

Bei der Ausführungsform nach den Figuren 2 und 3 wurden, soweit es sich um in Figur 1 übereinstimmende Teile handelt, gleiche Bezugszeichen verwendet. Für die Beaufschlagung der Kupplungsachse 8 findet hierbei jedoch keine Exzenterwelle Anwendung, sondern eine Anordnung, bei der eine obere Scheibe 36 an der in das Gehäuse 11 eingesetzen Bodenbüchse 30 befestigt ist, während eine axial beabstandete untere Scheibe 31 mit dem Kettenrad 35 in Verbindung steht, welchletzteres sich über den Kettentrieb 20 verdrehen läßt. Die einander zugekehrten Planflächen der Scheiben 36 und 31 besitzen keilförmige Schrägen, die zeichnerisch aus Gründen der Übersichtlichkeit nicht wiedergegeben wurden. Zwischen ihnen erkennt man Kugeln oder Rollen 34 derart, daß bei Drehung der unteren Scheibe 31 wegen der genannten Schrägen eine axiale Verschiebung der beiden Scheiben eintritt. Da die Scheibe 36 mit der Bodenbüchse 30 verbunden ist, führt eine Drehung der erwähnten Art zu einer Verschiebung der Stützmutter 33, auf welche die axiale Bewegung der Scheibe 31 über Druckstücke einwirkt. Diese Stütztmutter 33 ist auf die Kupplungsachse 8 aufgeschraubt, so daß es zur Übertragung der Verschiebebewegung auf die Achse 8 kommt. Der Außenumfang der unteren Scheibe 31 sowie der äußen Nagelhülse der Kugeln 34 und ein abgesetzter Schulterabschnitt des Kettenrades 35 liegen dabei an entsprechenden Innenflächen der Büchse 37 an, die ihrerseits an der Bodenbüchse 30 abgestützt ist.

Figur 3 zeigt den Kettentrieb 20, welcher eine Verdrehbewegung mittels des Betätigungshebels 22 auf das Kettenrad 35 überträgt. Für den Kettentrieb 20 ist der in Figur 2 erkennbare Kettenkanal 21 ausgespart.

Am zweiten Kupplungsteil 10 greift ein Seilzug 25 an, der eine Rückstellung des Gegenanschlages 2 aus der Betriebsstellung in die Ausgangslage ermöglicht. Diesem Zweck dient die in Figur 2 erkennbare Triebfeder 24, die auf den Rückstellantrieb 23 einwirkt.

Die Einstellschnecke 5 ist in der Exzenterhülse 26 gelagert. Mittels des Handrades 29 läßt sie sich innerhalb dieser Lagerung einstellen. Das dem Handrad 29 gegenüberliegende Ende der Einstellschnecke ist mit einem Drehgeber 19 ausgeführt, der mittels der Exzenterhülse 27 im Gehäuse befestigt ist.

Für das mit dem Anschlag 4 versehene Getrieberad erkennt man in Figur 3 weiterhin Näherungsschalter 19 an sich gegenüberliegenden Stellen, die auf Korrekturnocken 28 in Plus-und Minusrichtung ansprechen, so daß sich eine Feinkorrektur der Einstellungen vornehmen läßt.

Der Drehgeber 18 zeigt die mittels der Einstellschnecke vollzogene Winkeleinstellung über eine Digitalanzeige an. Somit besteht die Möglichkeit, bei der Herstellung des Rundteiltisches auch eine Justierung vorzunehmen, so daß selbst minimale Herstelltolleranzen beim fertigen Rundteiltisch ausgeglichen sind.

**Ansprüche**

1. Stufenlos einstellbarer Rundteiltisch, der mit einem konzentrischen, ersten Kupplungsteil (9) ausgeführt ist, an welches ein zweites, konzentrisches Kupplungsteil (10) anpreßbar ist, dessen Winkelstellung über ein Einstellgetriebe vorgebbar ist, dadurch gekennzeichnet, daß das Einstellorgan des Einstellgetriebes im direkten Eingriff mit einem Getrieberad steht, welches einen ersten Anschlag (4) eines Anschlagpaares, (3,4) trägt, dessen zweiter Anschlag (3) mit axialem Abstand vom Anschlag (4) am Gehäuse ortsfest vorgesehen ist, während zwischen beiden Anschlägen (3, 4) ein am zweiten Kupplungsteil (10) befindlicher Gegenanschlag (2) bei einer Drehbewegung des Tisches in eingekuppeltem Zustand des lezteren bewegbar ist.

2. Stufenlos einstellbarer Rundteiltisch nach Anspruch 1,
dadurch gekennzeichnet,
daß das Einstellorgan des Einstellgetriebes eine Einstellschnecke (5) ist, die mit einem als Schneckenrad (6) ausgebildeten Getrieberad im direkten Eingriff steht.

3. Stufenlos einstellbarer Rundteiltisch nach Anspruch 1,
dadurch gekennzeichnet,
daß das Einstellorgan des Einstellgetriebes eine Einstellschnecke (5) ist, die mit einem als schräg verzahntes Stirnrad ausgebildeten Getrieberad im direkten Eingriff steht.

4. Stufenlos einstellbarer Rundteiltisch nach den Ansprüchen 1 bis 3,
dadurch gekennzeichnet,
daß das zweite Kupplungsteil (10) am ersten Kupplungsteil (9) durch axiale Beaufschlagung anpreßbar ist, während bei Überwindung dieser Anpreßspannung der Tisch (14) an eine das Gehäuse (11) nach oben abschließende Gehäuseplatte (12) angepreßt ist.

5. Stufenlos einstellbarer Rundteiltisch nach Anspruch 4,
dadurch gekennzeichnet,
daß das erste Kupplungsteil (9) mittels einer oder mehreren vorgespannten Tellerfedern (1) in Richtung auf das zweite Kupplungsteil (10) beaufschlagt ist, welche Tellerfedern (1) mittels des Flansches einer konzentrischen Kupplungsachse (8) am vom Tisch (14) gehaltenen ersten Kupplungsteil (9) in axialer Richtung weiter anpreßbar sind, bis die Anpreßspannung zwischen dem ersten und dem zweiten Kupplungsteil (9, 10) überwunden ist, wobei für die Betätigung der Kupplungsachse (8) eine eine Querbohrung der letzteren durchsetzende Exzenterwelle (7) im Gehäuse gelagert ist.

6. Stufenlos einstellbarer Rundteiltisch nach Anspruch 4,
dadurch gekennzeichnet,
daß das erste Kupplungsteil (9) mittels einer oder mehreren vorgespannten Tellerfedern (1) in Richtung auf das zweite Kupplungsteil (10) beaufschlagt ist, welche Tellerfedern (1) mittels des Flansches einer konzentrischen Kupplungsachse (8) am vom Tisch (14) gehaltenen ersten Kupplungsteil (9) in axialer Richtung weiter anpreßbar sind, bis die Anpreßspannung zwischen dem ersten und dem zweiten Kupplungsteil (9, 10) überwunden ist, wobei für die Betätigung der Kupplungsachse (8) auf deren mit einem Gewinde versehenes Ende eine Mutter aufgeschraubt und mit einem seitlich herausgeführten Hebel betätigbar ist.

7. Stufenlos einstellbarer Rundteiltisch nach Anspruch 4,
dadurch gekennzeichnet,
daß das erste Kupplungsteil (9) mittels einer oder mehreren vorgespannten Tellerfedern (1) in Richtung auf das zweite Kupplungsteil (10) beaufschlagt ist, welche Tellerfedern (1) mittels des Flansches einer konzentrischen Kupplungsachse (8) am vom Tisch (14) gehaltenen ersten Kupplungsteil (9) in axialer Richtung weiter an preßbar sind, bis die Anpreßspannung zwischen dem ersten und dem zweiten Kupplungsteil (9, 10) überwunden ist, wobei für die axiale Anpressung an der Kupplungsachse (8) zwei zu ihr konzentrische relativ zueinander verdrehbare ringförmige Scheiben (31, 36) mit axialem Abstand voneinander vorgesehen sind, von denen eine (31) auf die Kupplungsachse (8) einwirkt, und die andere, (36) an einer Bodenbüchse (30) befestigt ist, wobei die Scheiben (31, 36) an ihren Planflächen aufeinander einwirkende, keilförmige Schrägen besitzen, und daß die auf die Kupplungsachse 8 einwirkende Scheibe (31) mittels eines von außerhalb des Gehäuses betätigbaren Kettentriebes (20) verdrehbar ist.

8. Stufenlos einstellbarer Rundteiltisch nach den Ansprüchen 1 bis 7,
dadurch gekennzeichnet,
daß für den Antrieb der Betätigungsorgane der Kupplungsachse (8) ein Zylinder vorgesehen ist, der mit einem Fluid beaufschlagbar ist.

9. Stufenlos einstellbarer Rundteiltisch nach den Ansprüchen 1 bis 3,
dadurch gekennzeichnet,
daß das erste Kupplungsteil (9) mittels einer oder mehreren vorgespannten Tellerfedern (1) in Richtung auf das zweite Kupplungsteil (10) beaufschlagt ist, welche Tellerfedern (1) mittels des Flansches einer konzentrischen Kupplungsachse (8) am vom Tisch (14) gehaltenen ersten Kupplungsteil (9) in axialer Richtung weiter anpreßbar sind, bis die Anpreßspannung zwischen dem ersten und dem zweiten Kupplungsteil (9, 10) überwunden ist, wobei für die Betätigung der Kupplungsachse (8) ein Zylinder vorgesehen ist, der sich mit einem Fluid beaufschlagen läßt, und aus welchem die Kupplungsachse (8) dichtend herausgeführt ist.

10. Stufenlos einstellbarer Rundteiltisch nach den Ansprüchen 1 bis 9,
dadurch gekennzeichnet,
daß für das zweite Kupplungsteil (10) eine auslösbare, selbsttätige Rückstellung besteht, die den Gegenanschlag (2) von seiner Anlage am Anschlag (3) in seine Ausgangslage am Anschlag (4) überführt.

11. Stufenlos einstellbarer Rundteiltisch nach den Ansprüchen 1 bis 10,
dadurch gekennzeichnet,
daß sich der erste Anschlag (4) an einer Seite des Getrieberades befindet, das auf seiner gegenüberliegenden Seite im Winkelbereich zwischen 0 bis mindestens 180° für den Eingriff mit dem Einstellorgan des Einstellgetriebes ausgebildet ist.

12. Stufenlos einstellbarer Rundteiltisch nach den Ansprüchen 10 und 11,
dadurch gekennzeichnet,
daß ein Rückstellantrieb an einer Außenverzahnung des zweiten Kupplungsteils (10) angreift.

13. Stufenlos einstellbarer Rundteiltisch nach den Ansprüchen 1 bis 12,
dadurch gekennzeichnet,
daß für das Einstellorgan ein motorischer Antrieb besteht, der eine Voreinstellung ermöglicht.

14. Stufenlos einstellbarer Rundteiltisch nach den Ansprüchen 1 bis 13
dadurch gekennzeichnet,
daß an dem den Anschlag (4) tragenden Getrieberad des Einstellgetriebes ein Signalgeber für die Darstellung des Einstellwinkels angebracht ist.

15. Stufenlos einstellbarer Rundteiltisch nach den Ansprüchen 1 bis 14,
dadurch gekennzeichnet,
daß die Anschläge (3, 4) mit Stoßdämpfern ausgerüstet sind.

16. Stufenlos einstellbarer Rundteiltisch nach den Ansprüchen 1 bis 15,
dadurch gekennzeichnet,
daß das Einstellorgan des Einstellgetriebes mit einem Drehgeber (18) für die Digitalanzeige des eingestellten Winkels versehen ist.

17. Stufenlos einstellbarer Rundteiltisch nach den Ansprüchen 1 bis 16,
dadurch gekennzeichnet,
daß für das mit dem Anschlag (4) versehene Getrieberad in jeder seiner beiden Einstellrichtungen (±) ansprechende Näherungsschalter (19) mit einem oder mehreren Korrekturnocken (28) für die Feinkorrektur der Einstellungen vorgesehen sind.

FIG. 1

0 255 609

FIG. 2

0 255 609

FIG. 3